# EUROPEAN PATENT SPECIFICATION

(11) **EP 1 078 236 B1**
(45) Date of publication and mention of the grant of the patent: **17.04.2002**
(21) Application number: 99923747.2
(22) Date of filing: 21.05.1999
(51) Int. Cl.: G01M 13/00, G01M 19/00

(54) **TEST RIG**
PRUEFSTAND
BANC D'ESSAI

(30) Priority: 22.05.1998 GB 9810971
(43) Date of publication of application: 28.02.2001
(73) Proprietor: Meritor Light Vehicle Systems (UK) Ltd, Birmingham B30 3BW (GB)
(72) Inventor: FISHER, Sydney Edward, Solihull, West Midlands B90 2HB (GB)
(74) Representative: Jones, John Bryn
(86) International application number: GB9901611
(87) International publication number: WO9961877

(56) References cited:
- US-A- 4 435 979
- US-A- 4 846 006

## Description

The present invention relates to test rigs for assessing the performance of a force generating actuator, and in particular for assessing the performance of force generating actuators used to effect powered closure of an automotive vehicle door.

Typically such test rigs have assessed the performance of the actuator by requiring the actuator to overcome a known constant load. Such a system is disclosed in US-A-4 435 979.

It is an object of the present invention to provide an improved form of test rig which allows a progressive increase in the force required to be overcome by the actuator. It is a further object of the invention to provide a test rig which is simple to manufacture, use and maintain, and in which the force to be overcome can be easily changed to suit different test conditions.

Thus according to the present invention there is provided a test rig for assessing the performance of a force generating actuator, including a beam angularly displaceable about a fulcrum from a position of rest, means for mounting the actuator to apply a turning force to the beam, and resistant means acting on the beam in opposition to said force; characterised in that the resistant means includes a plurality of resistant elements which are progressive engaged by the beam as it is displaced from the position of rest to provide a progressively increasing resistant force.

The present invention will now be described, by way of example only, with reference to the accompanying drawings in which:-
Figure 1 is a view of a test rig according to the present invention in a position of rest;
Figure 2 is a view of the test rig of Fig.1 in which the actuator has applied a partial turning force, and;
Figure 3 is a view of test rig of Figure 1 in which the actuator has applied a full turning force.
Figure 4 is a graph showing the resistant force exerted on the actuator during its range of travel.

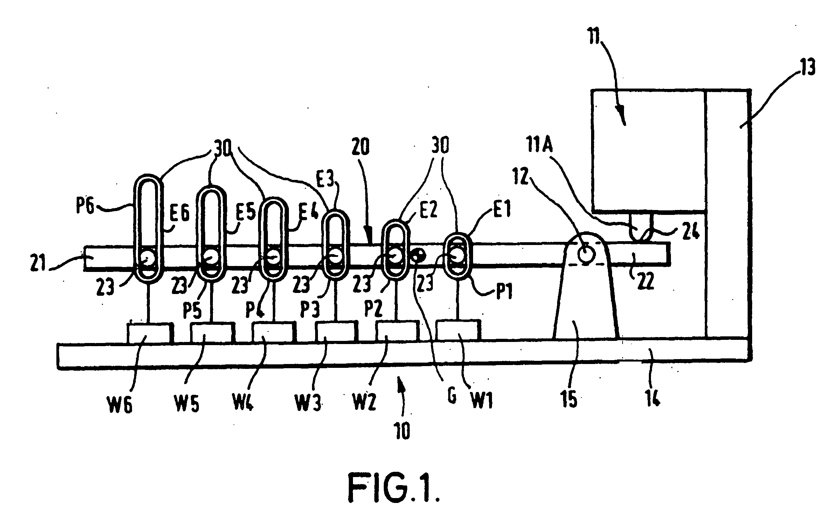

With reference to Figures 1 to 3 of the accompanying drawings there is illustrated a test rig 10 comprising a base 14, a mounting means 13 rigidly secured to the base 14 and a fulcrum mounting 15, also rigidly secured to the base 14. The test rig further comprises a beam 20, mounted in an angularly displaceable fashion on fulcrum mounting 15 via fulcrum 12, and resistant means 30.

Beam 20 comprises a first arm 21 on one side of the fulcrum 12 and a second arm 22 on the other side of the fulcrum 12. First arm 21 includes a plurality of pins 23 regularly spaced apart along the beam with each pin projecting laterally from the beam. Second arm 22 includes an abutment 23 for contact by an actuator 11.

When the test rig is in use, the actuator 11 is mounted on mounting means 13.

The resistant means 30 includes (in this case) six resistive elements E1-E6. Resistive element E1 includes an elongate portion P1 defining a vertical slot, and a weight W1 fixed to the lower part of elongate portion P1. The other resistive elements E2-E6 each have respective elongate portions P2-P6 and respective weights W2-W6. In this example elongate portion P1 defines the shortest vertical slot and elongate portions P2-P6 progressively define longer vertical slots. Furthermore, in this example weights W1-W6 are equal.

Consideration of Figure 1, which shows the beam 20 in a position of rest, shows that each pin 23 sits in a respective slot of the respective elongate portion of the associated resistive element. Furthermore each pin 23 is remote from the upper end portion of the slot of the corresponding resistive element with the beam in this position. Thus it is apparent that each resistive element has a lost motion connection with the beam, and in this case for example the lost motion connection of resistive element E6 is greater than the lost motion connection of resistive element E1 with the beam.

Operation of the test rig is as follows:

Force generating actuator 11 is mounted on the mounting means 13 and is operated such that actuator rod 11A contacts abutment 24 and causes the beam to rotate in a clockwise direction when viewing Figure 1. Initially the actuator only has to overcome the resistant force caused by the centre of gravity G of the beam being off-set relative to the fulcrum 12. Subsequently the pin 23 associated with the elongate portion P1 of resistive element E1 contacts the upper portion of its corresponding slot resulting in weight W1 being lifted off base 14. Further operation of actuator 11 causes each weight W2 to W6 to progressively lift off base 14 requiring actuator 11 to produce a progressively increasing turning force to overcome the progressively increasing resistant force of the resistant means 30.

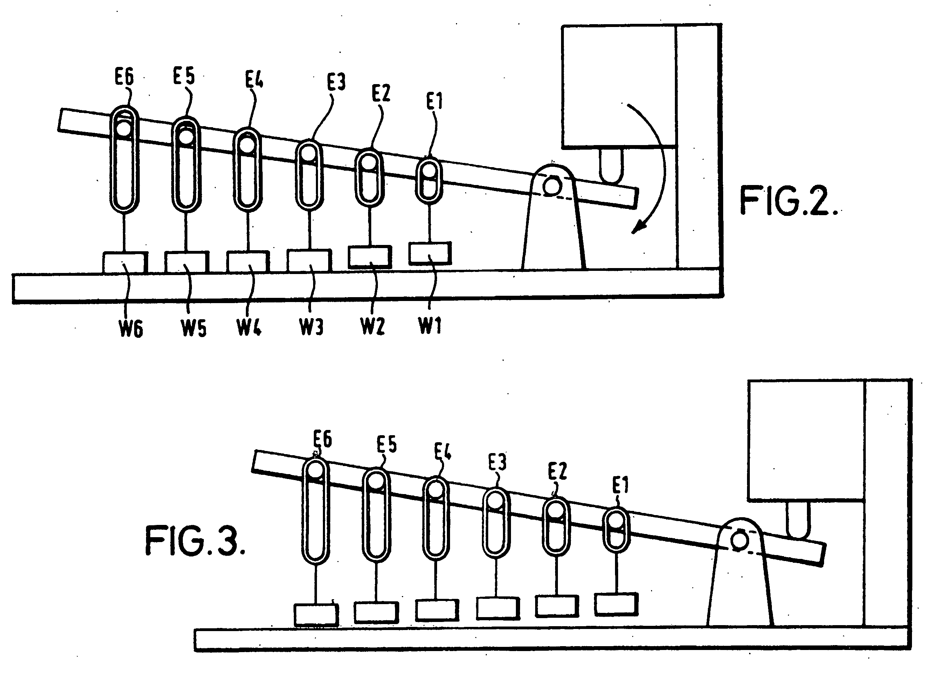

Figure 2 shows a resistive force being provided by resistive elements E1, E2, and E3 and figure 3 shows a resistive force being provided by all the resistive elements E1 to E6,

It is apparent that it is easy to change the test rig to simulate different operating conditions, for example:-
a. One or more resistive elements can be disconnected from the beam.
b, The weights of one or more resistive elements can be easily altered.
c. The amount of the lost motion connection of one or more resistive elements can be varied.
d. Provision may be made for adjusting the position of one or more of pins 23 longitudinally of the beam.

Furthermore not only does the rig allow easy alteration of the resistant force to be overcome by the actuator, but also the rotational inertia of the beam and associated resistive elements about fulcrum 12 can be varied. For example a resistive element of weight X acting at distance Y from the fulcrum 12 produces the same resistive force as a resistive element of weight half X acting at distance 2Y from the fulcrum 12, but the rotational inertia about fulcrum 12 is two times less in the former case than in the latter case. Thus it is possible to use the rig to simulate not only the force required to close an automotive door but also to simulate the inertia of that door. Additionally adverse closing conditions of a door can be simulated such as wind forces on the door or when the vehicle is parked on a slope.

In further embodiment of the invention one or more of the weights W1 to W6 could be replaced by a chain connected at one end to the corresponding elongate portion P1 to P6 such that rotation of the beam causes the chain to progressively lift off the base 14.

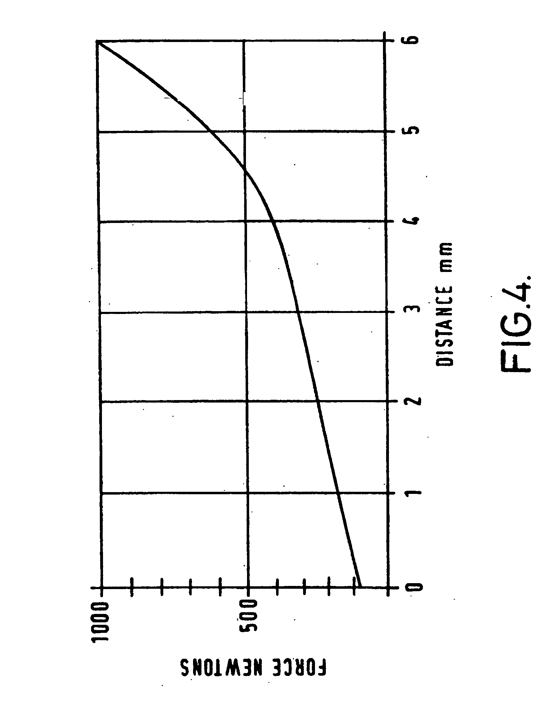

Figure 4 is a graph of the resistant force exerted on the actuator during its range of travel in a typical test cycle using a rig, simulating the force needed to close a door by powered rotation of the latch bolt claw from its first engagement with the related striker (first safety position) to fully latched involving compression of the door weather seals.

## Claims

1. A test rig for assessing the performance of a force 'generating actuator including a beam angularly displaceable about a fulcrum from a position of rest, means for mounting the actuator to apply a turning force to the beam, and resistant means acting on the beam in opposition to said force; **characterised in that** the resistant means includes a plurality of resistant elements which are progressively engaged by the beam as it is displaced from the position of rest to provide a progressively increasing resistant force.

2. A test rig as defined in Claim 1 in which the beam includes an abutment for applying a turning force to angularly displace the beam about the fulcrum.

3. A test rig as defined in Claim 2 in which the fulcrum is positioned between the resistant means and the abutment.

4. A test rig as defined in any previous claim in which the resistant means includes a plurality of weights, at least one of which does not create a resistant force when the beam is in the position of rest and does create a resistant force when the beam is angularly displaced from the position of rest.

5. A test rig as defined in Claim 4 in which the said at least one weight is connected to the beam by a lost motion connection.

6. A test rig as defined in Claim 5 in which the lost motion connection is in the form of a pin on one of the beam or weight slidable in a slot of the other of the beam or weight.

7. A test rig as defined in any previous claim in which the centre of gravity of the beam is not coincident with the fulcrum.

8. A test rig as defined in any previous claim in which the resistant means includes a chain which progressively increases the resistant force during at least part of the movement of the beam from the position of rest to a test position.

9. A test rig as defined in any preceding claim in which the resistant means is arranged to simulate the progressive increase in force necessary to effect door closure from a first safety position at which a claw or other bolt of a door latch initially engages a contacting striker of a door aperture.

10. A test rig as defined in any previous claim including an actuator, said actuator being a latching actuator for effecting powered closure of a vehicle door.

11. A method of assessing the performance of a force generating actuator comprising the steps of mounting the actuator in a test rig according to any one of claims 1 to 11, and operating the actuator to angularly displace the beam about the fulcrum.

## Patentansprüche

1. Prüfstand zur Leistungsprüfung eines krafterzeugenden Stellgliedes, welcher einen aus einer Ruheposition winklig um einen Drehpunkt auslenkbaren Balken enthält, eine Halterung für das Stellglied, so daß es eine drehende Kraft auf den Balken ausübt, und ein Widerstandsmittel, das auf den Balken entgegen der Kraft einwirkt; **dadurch gekennzeichnet, daß** das Widerstandsmittel eine Vielzahl von Widerstandselementen enthält, auf welche der Balken bei einer Auslenkung aus der Ruheposition fortschreitend einwirkt, wodurch eine fortschreitend zunehmende Widerstandskraft geschaffen wird.

2. Prüfstand nach Anspruch 1, **dadurch gekennzeichnet, daß** der Balken ein Widerlager zur Aufnahme einer drehenden Kraft aufweist, um den Balken um den Drehpunkt im Winkel zu verstellen.

3. Prüfstand nach Anspruch 2, **dadurch gekennzeichnet, daß** der Drehpunkt zwischen dem Widerstandsmittel und dem Widerlager liegt.

4. Prüfstand nach einem der vorhergehenden Ansprüche, **dadurch gekennzeichnet, daß** das Widerstandsmittel mehrere Gewichte enthält, von denen wenigstens eines keine Widerstandskraft erzeugt, wenn sich der Balken in der Ruheposition befindet, und eine Widerstandskraft erzeugt, wenn der Balken winklig aus der Ruheposition ausgelenkt wird.

5. Prüfstand nach Anspruch 4, **dadurch gekennzeichnet, daß** wenigstens ein Gewicht durch eine mit Spiel versehene Verbindung mit dem Balken verbunden ist.

6. Prüfstand nach Anspruch 5, **dadurch gekennzeichnet, daß** die mit Spiel versehene Verbindung in Form eines Stiftes entweder im Balken oder im Gewicht gebildet wird, welcher in einem Schlitz im Gewicht oder im Balken gleiten kann.

7. Prüfstand nach einem der vorhergehenden Ansprüche, **dadurch gekennzeichnet, daß** der Balkenschwerpunkt nicht mit dem Drehpunkt übereinstimmt.

8. Prüfstand nach einem vorhergehenden Ansprüche, **dadurch gekennzeichnet, daß** das Widerstandsmittel eine Kette beinhaltet, welche die Widerstandskraft wenigstens während eines Teils der Bewegung des Balkens aus der Ruheposition in eine Testposition fortschreitend erhöht.

9. Prüfstand nach einem der vorhergehenden Ansprüche, **dadurch gekennzeichnet, daß** das Widerstandsmittel zur Simulation des fortschreitenden Kraftzuwachses angebracht wird, welcher nötig ist, das Schließen einer Tür aus einer ersten Sicherheitsposition, in der eine Klaue oder ein anderer Stift eines Türschlosses erstmalig in eine berührende Falle einer Türöffnung eingreift, zu bewirken.

10. Prüfstand nach einem der vorhergehenden Ansprüche, **dadurch gekennzeichnet, daß** es ein Stellglied enthält, welches ein verriegelndes Stellglied zum motorisch betriebenen Schließen einer Fahrzeugtür ist.

11. Verfahren zur Leistungsprüfung eines krafterzeugenden Stellgliedes, **dadurch gekennzeichnet, daß** es die Schritte zum Anbringen eines Stellgliedes in einem Prüfstand gemäß eines der Ansprüche 1 bis 11 aufweist und das Stellglied zur winkligen Verlagerung des Balkens um den Drehpunkt betreibt.

## Revendications

1. Un banc d'essai pour vérifier les performances d'un actionneur de génération de force incluant une poutre, déplaçable angulairement autour d'un point d'articulation depuis une position de repos, des moyens pour monter l'actionneur afin d'appliquer une force de rotation sur la poutre et des moyens de résistance agissant sur la poutre en opposition à ladite force; **caractérisé en ce que** les moyens de résistance comprennent une pluralité d'éléments de résistance mis en contact progressivement par la poutre lorsqu'elle est déplacée par rapport à la position de repos, afin de fournir une force de résistance qui augmente progressivement.

2. Un banc d'essai selon la revendication 1, dans lequel la poutre comprend une butée pour appliquer une force d'application afin de déplacer angulairement la poutre autour du point d'articulation.

3. Un banc d'essai selon la revendication 2, dans lequel le point d'articulation est placé entre les moyens de résistance et la butée.

4. Un banc d'essai selon l'une quelconque des revendications précédentes, dans lequel les moyens de résistance comprennent une pluralité de masses, dont au moins une ne crée pas de force de résistance lorsque la poutre est à la position de repos et crée une force de résistance, lorsque la poutre est déplacée angulairement par rapport à la position de repos.

5. Un banc d'essai selon la revendication 4, dans lequel lesdites au moins une masse sont reliées à la poutre par une liaison à course morte.

6. Un banc d'essai selon la revendication 5, dans lequel la liaison à course morte se présente sous la forme d'une tige, placée dans l'une parmi la poutre ou la masse susceptible de coulisser dans une fente ménagée par l'autre élément parmi la poutre ou la masse.

7. Un banc d'essai selon l'une quelconque des revendications précédentes, dans lequel le centre de gravité de la poutre ne coïncide pas avec le point d'articulation.

8. Un banc d'essai selon l'une quelconque des revendications précédentes, dans lequel les moyens de résistance incluent une chaîne qui augmente progressivement la force de résistance durant au moins une partie du déplacement de la poutre depuis la position de repos vers une position de test

9. Un banc d'essai selon l'une quelconque des revendications précédentes, dans lequel les moyens de résistance sont agencés pour simuler l'augmentation progressive de force nécessaire pour effectuer la fermeture d'une porte, depuis une première position de sécurité à laquelle une griffe ou un autre élément, tel qu'un boulon d'un verrou de porte, s'engage initialement avec un frappeur à contact d'une ouverture de porte.

10. Un banc d'essai selon l'une quelconque des revendications précédentes incluant un actionneur, ledit actionneur étant un actionneur de verrouillage devant effectuer une fermeture motorisée d'une porte de véhicule.

11. Procédé d'appréciation des performances d'un actionneur de générateur de force, comprenant les étapes de montage de l'actionneur dans un banc d'essai selon l'une quelconque des revendications 1 à 11, et d'actionnement du générateur pour déplacer angulairement la poutre autour du point d'articulation.
